# EUROPEAN PATENT SPECIFICATION

(11) **EP 3 898 212 B1**
(45) Date of publication and mention of the grant of the patent: **30.11.2022**
(21) Application number: 19839134.4
(22) Date of filing: 19.12.2019
(51) Int. Cl.: B29D 30/06, B29C 33/42, B29D 30/72

(54) **METHOD FOR CONTROLLING A MOLDING AND VULCANIZATION PROCESS OF A TYRE AND TYRE OBTAINED THROUGH A MANUFACTURING PROCESS WHEREIN SUCH A METHOD IS CARRIED OUT**
VERFAHREN ZUR STEUERUNG EINES FORM- UND VULKANISATIONSPROZESSES EINES REIFENS UND DURCH EIN HERSTELLUNGSVERFAHREN ERHALTENER REIFEN, IN DEM EIN SOLCHES VERFAHREN AUSGEFÜHRT WIRD
MÉTHODE DE CONTRÔLE D'UN PROCÉDÉ DE MOULAGE ET DE VULCANISATION D'UN PNEUMATIQUE ET PNEUMATIQUE OBTENU PAR UN PROCÉDÉ DE FABRICATION DANS LEQUEL UNE TELLE MÉTHODE EST MISE EN OEUVRE

(30) Priority: 20.12.2018 IT 201800020395
(43) Date of publication of application: 27.10.2021
(73) Proprietor: Pirelli Tyre S.p.A., 20126 Milano (IT)
(72) Inventor: MARTELLOTTA, Fabio, 20126 Milano (IT); MERVIC, Stefano Rosario, 20126 Milano (IT); TRABATTONI, Andrea, 20126 Milano (IT)
(74) Representative: Porta & Consulenti Associati S.p.A.
(86) International application number: PCT/IB2019/061071
(87) International publication number: WO 2020/128931

(56) References cited:
- US-A- 5 382 402
- US-A1- 2015 269 468
- US-A1- 2017 050 473

## Description

The present invention relates to a method for controlling a molding and vulcanization process of a tyre.

The invention also relates to a tyre obtained through a manufacturing process wherein the aforementioned method is actuated.

Hereinafter, the expressions "downstream" and "upstream" are used with reference to a predetermined feeding direction and to a predetermined reference. Therefore, hypothesizing for example a feeding direction from left to right, a "downstream" position with respect to a reference indicates a position to the right of said reference and an "upstream" position with respect to a reference indicates a position to the left of said reference.

The term "image", in general is used to indicate a set of data, typically contained in a computer file, in which each n-tuple of coordinates (typically each pair of coordinates) of a finite set (typically two-dimensional and matrix-type, i.e. N rows x M columns) of n-tuples of spatial coordinates (each n-tuple corresponding to a "pixel") is associated with a corresponding set of numerical values (that can be representative of parameters of different type). For example in monochromatic images (like gray levels or 'grayscale' images) such a set of values consists of a single value in a finite scale (typically with 256 levels or tones), such a value being for example representative of the level of luminosity (or intensity) of the respective n-tuples of spatial coordinates when viewed. A further example is represented by color images, in which the set of values represents the level of luminosity of multiple colors, or channels, typically the primary colors (for example in the RGB decoding model red, green and blue, whereas in the CMYK decoding model cyan, magenta, yellow and black). The term "image" does not necessarily imply the actual displaying thereof.

Any reference to a specific "image" more generally includes any image that can be obtained through one or more digital processing of said specific image (like for example filtering, equalization, 'smoothing', binarizations, thresholding, morphological transformations ('opening', etc.), derivative or integral calculations, etc.).

The expression "optical code" is used to indicate any graphical representation having the function of storing encoded information. A particular example of optical code consists of linear or two-dimensional codes, in which the information is encoded through suitable combinations of elements of predetermined shape, for example square, rectangular or hexagonal, having a dark color (normally black) which are separated by light elements (spaces, normally white), such as barcodes, stacked codes and two-dimensional codes in general, color codes, etc.. The expression "optical code" also comprises, more generally, other graphical forms having the function of encoding information, including characters printed unencrypted (letters, numbers, etc.) and special shapes ("patterns") (like for example stamps, logos, signatures, fingerprints etc.). The expression "optical code" also comprises graphical representations capable of being detected, not only in the field of visible light, but also in the band of wavelengths comprised between infrared and ultraviolet.

A tyre for vehicle wheels comprises a carcass structure comprising at least one carcass ply formed of reinforcing cords incorporated in a matrix of elastomeric material. The carcass ply has end edges respectively engaged with annular anchoring structures. The latter are arranged in the areas of the tyre usually identified with the name "beads" and each of them is normally formed of a substantially circumferential annular insert on which at least one filling insert is applied, in a radially outer position thereof. Such annular inserts are commonly identified as "bead cores" and have the task of keeping the tyre properly fixed to the anchoring seat specifically provided in the rim of the wheel, thus avoiding the radially inner end edge of the tyre coming out from such a seat during operation.

Specific reinforcing structures having the function of improving the transmission of torque to the tyre can be provided at the beads.

A crown structure is associated in radially outer position with respect to the carcass structure.

The crown structure comprises a belt structure and, in a radially outer position with respect to the belt structure, a tread band made of elastomeric material.

The belt structure comprises one or more belt layers, arranged in radial juxtaposition with respect to one another and having textile or metal reinforcing cords having crossed orientation and/or an orientation substantially parallel to the direction of circumferential extension of the tyre.

A layer of elastomeric material, called "sub-belt", can be provided between the carcass structure and the belt structure, this layer having the function of making the radially outer surface of the carcass structure as uniform as possible for the subsequent application of the belt structure.

A so-called "sub-layer" made of elastomeric material can be arranged between the belt structure and the tread band, the sub-layer having properties suitable for ensuring a stable union of the tread band to the belt structure.

Respective sidewalls made of elastomeric material are applied on the side surfaces of the carcass structure, each sidewall extending from one of the side edges of the tread band up to the respective annular anchoring structure to the beads.

US 2017/0080656, WO 2015/114097, EP 1389515, US 7883326 B1, US 2016/0193796 A1 describe vulcanization molds provided with removable inserts for impressing information or codes on the tyre. Patent document US 2017/050473 A1 discloses a method for providing an optically readable code on the side of a tyre.

In order to satisfy the standards set by the European Tyre and Rim Technical Organization (ETRTO), each tyre must display on its sidewalls, in addition to various numbers, marks and symbols identifying the type and size of the tyre, a numerical code, so-called DOT, comprising four digits: the first two digits indicate the week of the year of production of the tyre, the remaining two digits indicate the year of production of the tyre.

For example, if the digits represented in the DOT are 0818, they indicate the eighth week of 2018.

The application of the DOT on the tyre is carried out during the molding and vulcanization of the tyre and after having mounted on the vulcanization mold a panel on which the digits of the DOT have been previously engraved.

Such a panel must be replaced weekly so that the vulcanization mold is always equipped with engraved digits that correspond to the current week and year.

Typically, the operations of mounting the panel on the vulcanization mold and periodically replacing the panel are carried out by a worker upon a visual check that the digits engraved in the panel actually correspond to the current week/year.

The Applicant has observed that a possible accidental application in the vulcanization mold of an incorrect panel would result in all of the tyres possibly produced with such a mold being discarded. This would lead to serious inefficiency of production.

The Applicant has also observed that typically a visual check regarding the correctness of the DOT on the molded and vulcanized tyre is carried out and that a possible error found in the DOT after such a visual check would require an interruption of the molding and vulcanization operations, the opening of the mold and the replacement of the panel. Such a replacement might not, however, take place immediately after the opening of the mold due to the uncomfortable working conditions in which the worker would be, due substantially to the high temperatures reached in the vulcanization mold during the molding and vulcanization operations and to the release of hot vapors once the vulcanization mold is opened.

The Applicant has also observed that the digits of the DOT must necessarily be engraved on the panel in a reverse order with respect to the way in which they must then be displayed on the tyre, i.e. with respect to the conventional direction of reading. Therefore, it may not be easy to visually check that the digits engraved on the panel are correct. This could lead both to reading errors (and, consequently, to mounting an incorrect panel on the vulcanization mold), and to slowing down the mounting operation of the panel.

The Applicant has thought that, in order to avoid the risk of mounting an incorrect panel on the vulcanization mold, and at the same time to satisfy the increasingly stringent quality and safety specifications aimed at eliminating inefficiency in the production process of the tyre and/or risks of delivering to customers tyres not in accordance with what is required by ETRTO, it would be advisable to carry out the check about the correctness of the digits engraved on the panel after the panel has been mounted on the vulcanization mold and before the molding and vulcanization operations of the tyre have begun.

The Applicant has also through that it would be advisable to carry out such a check through electronic or opto-electronic reading devices and/or instruments, so as to avoid possible reading errors by the operator.

The Applicant has observed that in order to carry out the aforementioned check it is possible to use portable OCR (optical character recognition) reading devices. However, in order for such OCR reading devices to provide a reliable reading it is necessary to have constant and repeatable boundary conditions (luminosity, relative position between reading device and information to be read, stability and quality of the image); unfortunately, the working area in which the vulcanization molds are installed does not have these features.

An alternative could be to install the aforementioned OCR reading devices on a mobile trolley equipped with a suitable lighting station, adapted for creating boundary conditions suitable for an OCR reading at the vulcanization mold. However, this solution would require the movement of the mobile trolley in a working area in which typically there are many vulcanization molds, with small maneuvering spaces and consequent risks of collisions and difficulty of positioning.

Ultimately, according to the Applicant, both the solutions discussed above cannot be actuated due to the unsuitable environmental conditions of the working area in which the vulcanization molds are installed.

The Applicant has thus thought to a further solution aimed at allowing the correctness of the digits engraved on the panel to be checked after such a panel has been mounted on the vulcanization mold and before the molding and vulcanization operations of the tyre have begun.

The Applicant has perceived that by adding onto the panel an encoded information which relates to the aforementioned digits it becomes possible for the workers to safely and reliably carry out a check of the information to be impressed before the molding and vulcanization operations.

The Applicant has finally found that the aforementioned problems correlated to the difficulty of the OCR reading in the working area where the vulcanization mold is installed can basically be overcome by carrying out an OCR reading before the panel is mounted on the vulcanization mold (and therefore in an environment with boundary conditions suitable for allowing such a reading) and applying on that panel an optical code containing an encoding of the digits being read. In this way, once the panel is mounted on the vulcanization mold, the check that the digits engraved on the panel are correct can consist simply in reading (or decoding) the aforementioned optical code. Such reading can be carried out through the conventional optical readers, moreover without any need to provide for a prior calibration thereof. Optical readers are indeed capable of operating effectively in environmental conditions which are less stringent than those required by OCR reading devices.

The present invention therefore relates, in a first aspect thereof, to a method for controlling a molding and vulcanization process of a tyre.

Preferably, a panel is provided which contains an information to be impressed on said tyre and an optical code containing an encoding of said information to be impressed.

Preferably, mounting of the panel on a vulcanization mold is provided.

Preferably, reading the optical code, through an optical reader, from the panel mounted on the vulcanization mold so as to decode said information to be impressed and obtain a decoded information is provided.

Preferably, comparing said decoded information with a reference information is provided.

Preferably, if said decoded information corresponds to said reference information, molding and vulcanizing the tyre through said vulcanization mold is provided.

The Applicant believes that in this way it is possible to check that the information to be impressed which is engraved on the panel and that it is wished to impress on the tyre after the panel has been mounted on the vulcanization mold is correct.

For example, the reference information can be the current week of the production year, for example the eighth week of 2018: the information to be impressed on the tyre in this case is "0818".

It is essential for those producing tyres to ensure that the panel provided on the mold depicts the exact DOT of the week of production and not for example that of the week before or of another week/year of production.

By applying the method according to the invention a worker will read by an optical reader the optical code that contains the encoding of the DOT provided on the panel. By decoding the optical code and comparing the decoded information with the reference information (i.e. by comparing the DOT reproduced on the panel decoded through the reading of the optical code with the current week and year) there is a substantially immediate and error-free response on whether or not the DOT engraved on the panel is correct and therefore whether or not the digits that will be impressed on the tyre are correct. In the case of a lack of conformity, the molding and vulcanization operations are suspended until a new panel is mounted on the mold and the check has given a positive result.

The Applicant also observes that the worker is not required to read digits, letters or symbols engraved in a reverse order with respect to the conventional reading direction, thereby eliminating the risk of a reading error by the worker, the risk of discarding tyres produced after an incorrect panel has been mounted on the vulcanization mold, and the inefficiency of production described above.

In a second aspect thereof, the invention relates to a process for manufacturing a tyre.

Preferably, a green tyre is provided.

Preferably, actuating a control method according to the first aspect is provided.

In a further aspect thereof, the present invention relates to a tyre obtained by actuating the process in accordance with the second aspect.

Preferably, an information impressed on a sidewall of the tyre and, close to said impressed information, a pattern that reproduces said optical code are provided.

The Applicant has verified that qualified workers in charge of checking tyres have not identified any kind of irregularity or defect on the surface of tyres due to the presence of the aforementioned pattern, confirming the fact that such a pattern is visually hardly perceptible and in any case such as to ensure that the tyre passes all quality checks, human and automatic, which tyres are typically subjected to before being put on the market.

In at least one of the aforementioned aspects the present invention can have at least one of the preferred features described below.

Preferably, providing said panel containing said information to be impressed and said optical code comprises acquiring an image of said panel.

Preferably, providing said panel containing said information to be impressed and said optical code comprises reading in said image said information to be impressed.

Preferably, providing said panel containing said information to be impressed and said optical code comprises encoding said information to be impressed.

Preferably, providing said panel containing said information to be impressed and said optical code comprises applying said optical code on the panel.

Preferably, said information to be impressed comprises a plurality of digits engraved on a first face of said panel and indicating a week of a solar year and a solar year. The aforementioned information to be impressed therefore comprises the digits of a DOT.

Preferably, said plurality of digits is a reverse sequence of digits of the sequence of digits of a DOT.

Preferably, the acquisition of said image is carried out through an OCR recognition camera.

Preferably, such acquisition is carried out before bringing the panel in the working area in which the vulcanization mold is provided.

Preferably, the reading of said information to be impressed is carried out through an OCR recognition camera, more preferably through the same camera used to acquire the aforementioned image.

In preferred embodiments, the acquisition of the image and the reading of the aforementioned information to be impressed are carried out almost simultaneously.

Preferably, the application of the optical code is done through a laser marking or incision device.

Preferably, also the application of the optical code is carried out before bringing the panel in the working area in which the vulcanization mold is provided.

In preferred embodiments, the optical code is a Datamatrix. Such a type of optical code has a rectangular shape and a size compatible with the space available close to the DOT in the panel. However, any other type of optical code, like for example a QR code, or even a linear code, is suitable for the purpose.

Preferably, before acquiring said image, the panel is arranged on a conveyor device.

Preferably, the conveyor device comprises moving members configured to move the panel.

Preferably, the conveyor device comprises deflecting members configured to orient the panel along a predetermined feeding direction. In this way, the subsequent reading operation of the optical code is made easier.

Preferably, the panel comprises at least one first coupling element configured to couple with the vulcanization mold.

Preferably, the vulcanization mold comprises at least one second coupling element configured to couple with the panel.

In preferred embodiments, said at least one first coupling element and at least one second coupling element are configured to allow the panel to be mounted on the vulcanization mold, more preferably with a "poka-yoke" type coupling. In this way, the panel is prevented from being mounted on the vulcanization mold with the digits oriented in a reverse order. A stable, precise and repeatable mounting of the panel is also achieved.

Preferably, said first coupling element comprises a plug projecting canti-levered from a second face of the panel opposite said first face.

Preferably, said second coupling element comprises a hole made in the vulcanization mold and having a diameter with a size such as to achieve a shape coupling with said plug.

Preferably, said optical code has a longitudinal dimension comprised between 10% and 20% of a longitudinal dimension of said first face.

Preferably, said optical code has a transversal dimension comprised between 10% and 15% of a transversal dimension of said first face.

Preferably, said impressed information comprises a plurality of digits in relief on the sidewall of the tyre indicating a week of a solar year and a solar year.

Further features and advantages of the present invention will become clearer from the following detailed description of preferred embodiments thereof, made with reference to the attached drawings.

In such drawings:
- figure 1 is a schematic side view of an embodiment of a tyre obtained by actuating the method of the present invention;
- figure 1A is an enlargement of a portion of the tyre of figure 1;
- figure 2A is a schematic perspective front view of a panel used in the method of the present invention;
- figure 2B is a schematic perspective rear view of the panel of figure 2A;
- figure 3 is a schematic perspective view of said panel and of its housing seat;
- figure 4 is a schematized view of a conveyor device for a plurality of said panels;
- figure 5 is a schematic view showing an embodiment of the method of the present invention.

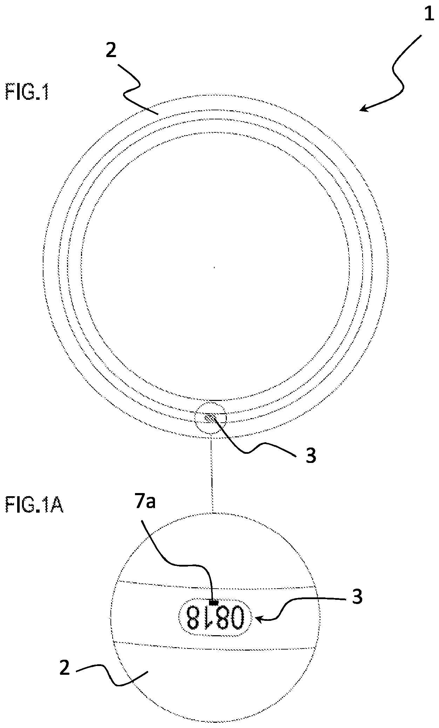

In figure 1, reference numeral 1 wholly indicates, in a schematic manner, an embodiment of a tyre in accordance with the present invention.

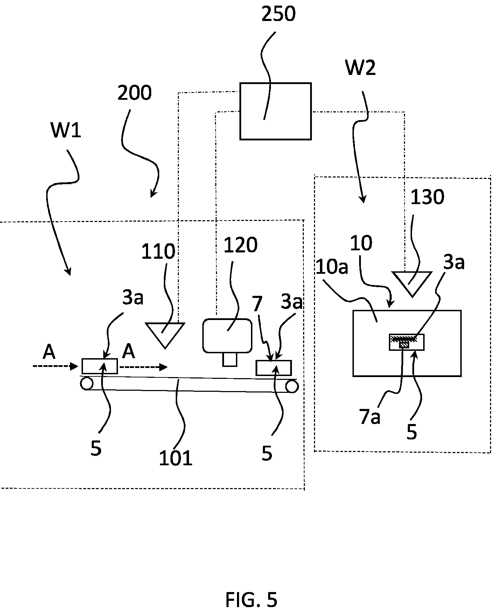

The tyre 1 is obtained by actuating the method illustrated as an example in figure 5 and described below.

The tyre 1 can be a tyre for vehicles having two or more wheels.

The tyre 1 comprises a pair of axially opposite sidewalls 2, only one of which is visible in figure 1.

In accordance with ETRTO, the sidewall 2 displays in relief various numbers, marks and symbols identifying the type and size of the tyre (for the sake of simplicity of illustration such numbers/marks/symbols are not shown in figure 1) and a numerical code containing an information to be communicated.

As shown in the enlargement of figure 1A, the numerical code is, in the specific case discussed here, a DOT (hereinafter indicated in association with reference numeral 3: "DOT 3"). Therefore, such a numerical code comprises four digits: the first two digits indicate the week of production of the tyre 1 in a solar year (in this specific case the digits 0 and 8, to indicate the eighth week of the year) and the remaining two digits indicate the solar year of production of the tyre 1 (in this specific case the digits 1 and 8, to indicate the year 2018).

The DOT 3 is impressed in relief on the sidewall 2 of the tyre 1 during the molding and vulcanization operations of the tyre 1 carried out through a conventional vulcanization mold 10 (schematically shown in figure 5).

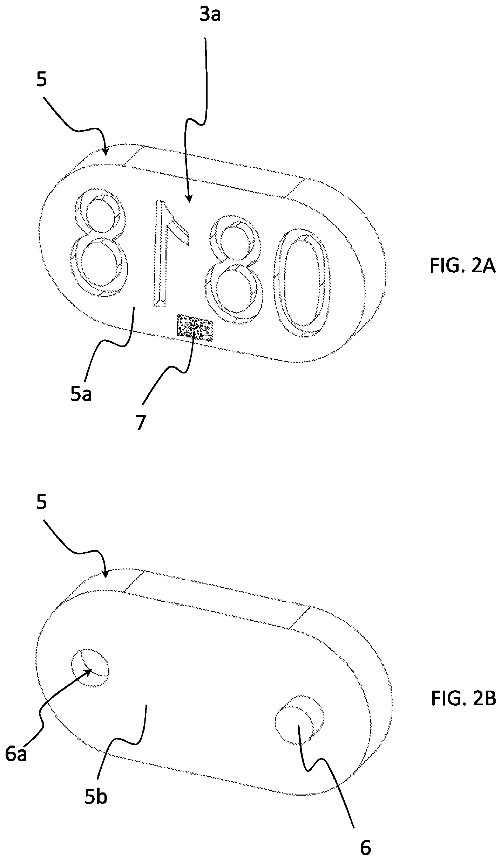

For this purpose, as shown in figure 2A, the digits of the DOT 3 are engraved on a first face 5a of a panel 5 to form a reverse sequence of digits 3a of the sequence of digits of the DOT 3.

The engraving of the sequence of digits 3a on the panel 5 is carried out through a conventional marking or incision device, preferably by a laser, before the panel 5 is mounted on the vulcanization mold 10 and in a working area W1 different from the working area W2 in which the vulcanization mold 10 is installed. In figure 5 the working areas W1 and W2 are schematically delimited by broken lines.

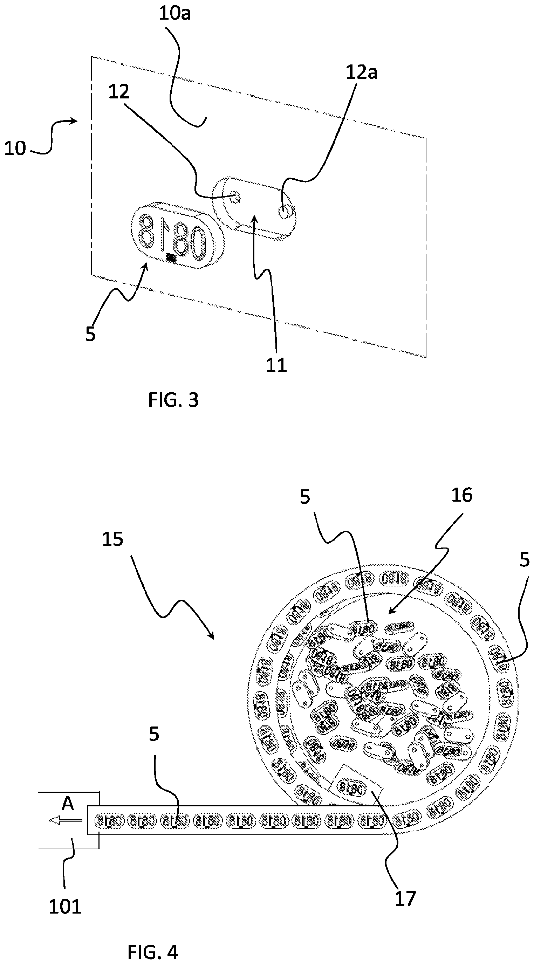

As schematically shown in figure 3, the panel 5 with the sequence of digits 3a is intended to be mounted in a suitable housing seat 11 formed in recess on an inner surface 10a of the vulcanization mold 10.

The panel 5 and the housing seat 11 have a pseudo-elliptical shape (i.e. substantially elliptical, with two opposite rectilinear sides) or pseudo-parallelepiped shape (i.e. substantially parallelepiped, with the opposite short sides curved) and have respective coupling elements configured to allow a mutual coupling that, preferably, is a shape coupling defined by matching surfaces, more preferably a "poka-yoke" type coupling.

In the embodiment shown in the attached figures (see in particular figures 2B and 3), the aforementioned coupling elements are defined by a plug 6 projecting canti-levered from a second face 5b of the panel 5 opposite the first face 5a, and by a hole 12 formed in the housing seat 11 provided in the vulcanization mold 10.

The plug 6 and the hole 12 have a complementary and matching shape. Preferably, like in the illustrated example, both have a cylindrical shape and the diameter of the hole 12 is slightly larger than that of the plug 6, so as to allow the plug 6 to be inserted in the hole 12 without leaving the plug 6 with any degrees of freedom in the radial direction.

Alternative embodiments are foreseen in which the plug is formed on the housing seat 11 and the corresponding hole is formed on the panel 5.

As shown in figures 2B and 3, in order to allow a particularly stable mutual coupling and avoid mutual positioning errors between panel 5 and housing seat 11, the panel 5 also has, on the second face 5b thereof, a hole 6a and the housing seat 11 also comprises a plug 12a intended to couple with the hole 6a. The plug 12a and the hole 6a have the same features discussed above with reference to the plug 6 and to the hole 12.

As shown in figure 2A, the first face 5a of the panel 5 has, in a lower position with respect to the sequence of digits 3a, an optical code 7, preferably a Datamatrix.

The optical code 7 is applied onto the panel 5 through a laser marking or incision device 120 provided in the working area W1 and contains an encoding of the aforementioned sequence of digits 3a.

The optical code 7 is intended to be read by a conventional optical reader 130, preferably of the portable type, after the panel 5 has been mounted on the vulcanization mold 10 (figure 5), so as to check that the DOT 3 is correct before proceeding with the molding and vulcanization operations of the tyre 1, as described better below.

The manufacturing process of the tyre 1 comprises a molding and vulcanization process of the tyre 1 in the vulcanization mold 10 and, prior to the molding and the vulcanization of the tyre 1, a check to verify that the panel 5 used each time is correct.

To the great benefit of efficiency and productivity, the aforementioned check is carried out by actuating a method that is at least partially automated.

Such a method comprises a series of operations actuated in an apparatus 200 schematically shown in figure 5 and described below. Some of these operations are carried out in the working area W1, others in the working area W2.

As shown in figure 4, in order to automate as much as possible the operations to be made in order to actuate the check discussed above, the apparatus 200 comprises, preferably upstream of the working area W1 or in the working area W1, a conventional conveyor device 15, for example an industrial vibrating feeder, on which a plurality of panels 5 containing the same sequence of digits 3a are loaded.

The conveyor device 15 is provided with moving members 16 configured to move the panels 5 towards deflecting members 17 specifically provided to orient the panels 5 and arrange them along a feeding direction A.

The apparatus 200 also comprises, at the working area W1, a conveyor belt 101 which can be moved along the aforementioned feeding direction A and on which the single panels 5 coming from the conveyor device 15 are arranged.

The apparatus 200 also comprises, at the conveyor belt 101, and thus again in the working area W1, an OCR reading device, in particular an OCR recognition camera, indicated with 110 in figure 5.

The OCR recognition camera 110 is operatively connected to a control member 250.

During the passage of the panel 5 under the OCR recognition camera 110 the latter acquires an image of the first face 5a of the panel 5, and thus an image containing the sequence of digits 3a, reads such digits from said image and communicates such a reading to the control member 250.

The conveyor belt 101 thus moves the panel 5 under the laser marking or incision device 120 discussed above.

The laser marking or incision device 120 is operatively connected to the control member 250 and receives from the latter the input to engrave on the first face 5a of the panel 5 an optical code 7 containing an encoding of the sequence of digits 3a read through the OCR recognition camera 110.

The aforementioned optical code 7 has extremely small dimensions with respect to the dimensions of the first face 5a of the panel 5.

Preferably, the optical code 7 has a longitudinal dimension comprised between 10% and 20% of the longitudinal dimension (length) of the first face 5a.

Preferably, the optical code 7 has a transversal dimension comprised between 10% and 15% of the transversal dimension (width) of the first face 5a.

The panel 5 with the sequence of digits 3a and the optical code 7 is taken from the conveyor belt 101 and unloaded in a suitable container, from which it will then be picked up to be mounted in the suitable housing seat 11 formed in the vulcanization mold 10 provided in the working area W2.

After the panel 5 has been mounted in the vulcanization mold 10, and before the molding and vulcanization operations of the tyre starts, the optical code 7 is read through the aforementioned optical reader 130. This reading is also communicated to the control member 250.

The control member 250 compares the reading communicated to it by the OCR recognition camera 110 with the reading communicated to it by the optical reader 7 so as to verify whether the sequence of digits 3a provided on the first face 5a of the panel 5 is actually the same as the one encoded in the optical code 7.

Only if such a verification has a positive outcome (this means that the panel 5 mounted on the vulcanization mold 10 contains the digits that will then define the correct DOT 3 on the tyre 1), the control member 250 gives the go-ahead to the molding and vulcanization operations of the tyre 1. In the contrary case, the aforementioned operations are interrupted, and the panel 5 will be replaced with a further panel 5 until the aforementioned verification confirms that the panel 5 mounted in the housing seat 11 has the correct DOT 3.

The operations discussed above are repeated identically for every panel 5 containing the same sequence of digits 3a, each panel being intended to be mounted in a respective vulcanization mold 10 (all installed in the working area W2) or in the case of replacement of an incorrect panel 5.

As shown in figure 1A, at the end of the molding and vulcanization operations of the tyre 1, the latter has on the sidewall 2 thereof, close to the DOT 3 (in the specific example illustrated, under the DOT 3 considering the reading direction of the DOT 3), a pattern 7a having shape and size identical to those of the optical code 7.

The pattern 7a consists in particular of a slight surface marking on the sidewall of the tyre 1. Such a pattern 7a is clearly visible only upon careful viewing the tyre 1 or through suitable optical magnifying tools. This is due to the small dimensions of the optical code 7 as provided above.

Quality checks carried out by the Applicant on the tyre 1 both through its qualified workers in charge of quality check and through automatic tests have not identified in the aforementioned pattern 7a a defect or an irregularity of the tyre 1, thus giving approval to put the tyre 1 on the market. In order for such a pattern 7a to remain of a size such as not to constitute a defect or an irregularity, it is advisable for the depth of the engraving of the digits of the DOT 3 on the first face 5a of a panel 5 to be limited.

The Applicant has carried out a series of tests using a Keyence SRG-100 optical reader, which is suitable for reading optical codes comprising cells of minimum linear dimensions equal to 0.127 mm, and engraving on the panel 5 a Datamatrix of type ECC 200 of dimensions equal to 1.5 mm x 3 mm, in which the single cells have a linear dimension equal to 0.15 mm, thus greater than the minimum dimensions required by the optical reader.

Such tests have confirmed the practical possibility and the effectiveness of carrying out the reading of an optical code applied to a panel containing a sequence of digits identifying a DOT, such a reading being carried out after the panel is mounted in a vulcanization mold.

The present invention has been described with reference to some preferred embodiments. Different modifications can be brought to the embodiments described above, while still remaining within the scope of protection of the invention, defined by the following claims.

## Claims

1. Method for controlling a molding and vulcanization process of a tyre (1), the method comprising:
- providing a panel (5) containing an information to be impressed on said tyre (1) and an optical code (7) containing an encoding of said information to be impressed;
- mounting the panel (5) on a vulcanization mold (10);
- reading, by an optical reader (130), the optical code (7) from the panel (5) mounted on the vulcanization mold (10) so as to decode said information to be impressed and obtain a decoded information;
- comparing said decoded information with a reference information, and
- if said decoded information corresponds to said reference information, molding and vulcanizing the tyre (1) through said vulcanization mold (10).

2. Method according to claim 1, wherein providing said panel (5) containing said information to be impressed and said optical code (7) comprises:
- acquiring an image of said panel (5);
- reading in said image said information to be impressed;
- encoding said information to be impressed;
- applying said optical code (7) on the panel (5).

3. Method according to claim 1 or 2, wherein said information to be impressed comprises a plurality of digits engraved on a first face (5a) of said panel (5) and indicating a week of a solar year and a solar year.

4. Method according to claim 2 or claim 3 when depending on claim 2, wherein acquiring said image is carried out through an OCR recognition camera (110).

5. Method according to claim 4, wherein reading said information to be impressed is carried out through said OCR recognition camera (110).

6. Method according to claim 2 or any one of claims 3 to 5 when depending on claim 2, wherein applying said optical code (7) is carried out through a laser marking or incision device (120).

7. Method according to any one of the previous claims, wherein said optical code (7) is a Datamatrix.

8. Method according to claim 2 or any one of claims 3 to 7 when depending on claim 2, comprising, before acquiring said image, arranging said panel (5) on a conveyor device (15) comprising moving members (16) configured to move the panel (5) and deflecting members (17) configured to orient the panel (5) along a predetermined feeding direction (A).

9. Method according to any one of the previous claims, wherein:
- said panel (5) comprises at least one first coupling element (6; 6a) configured to couple with the vulcanization mold (10);
- said vulcanization mold (10) comprises at least one second coupling element (12; 12a) configured to couple with the panel (5);
wherein said at least one first coupling element (6; 6a) and at least one second coupling element (12; 12a) are configured to allow the panel (5) to be mounted in the vulcanization mold (10) with a "poka-yoke" type coupling.

10. Method according to claim 9 when depending on claim 3, wherein said at least one first coupling element comprises a plug (6) projecting canti-levered from a second face (5b) of the panel (5) opposite to said first face (5a).

11. Method according to claim 10, wherein said at least one second coupling element comprises a hole (12) made in the vulcanization mold (10) and having a diameter with a size such as to obtain a shape coupling with said plug (6).

12. Method according to claim 3 or any one of claims 4 to 11 when depending on claim 3, wherein said plurality of digits is a reverse sequence of digits (3a) of the sequence of digits of a DOT (3).

13. Method according to claim 3 or any one of claims 4 to 12 when depending on claim 3, wherein said optical code (7) has a longitudinal dimension comprised between 10% and 20% of a longitudinal dimension of said first face (5a) and a transversal dimension comprised between 10% and 15% of a transversal dimension of said first face (5a).

14. Process for manufacturing a tyre (1), comprising:
- providing a green tyre;
- carrying out a control method according to any one of the previous claims.

15. Tyre (1) obtained by carrying out the process of claim 14, comprising an information impressed on a sidewall (2) thereof and, close to said impressed information, a pattern (7a) that reproduces said optical code (7).

## Patentansprüche

1. Verfahren zum Steuern eines Formungs- und Vulkanisierverfahrens für einen Reifen (1), wobei das Verfahren umfasst:
- Bereitstellen einer Tafel (5), die Informationen, die in den Reifen (1) eingeprägt werden sollen, sowie einen optischen Code (7) enthält, der eine Kodierung der Informationen, die eingeprägt werden sollen, enthält;
- Montieren der Tafel (5) an einer Vulkanisierform (10);
- Lesen, durch ein optisches Lesegerät (130), des optischen Codes (7) von der Tafel (5), die an der Vulkanisierform (10) montiert ist, um die Informationen, die eingeprägt werden sollen, zu dekodieren und dekodierte Informationen zu erhalten;
- Vergleichen der dekodierten Informationen mit Referenzinformationen, und
- wenn die dekodierten Informationen den Referenzinformationen entsprechen, Formen und Vulkanisieren des Reifens (1) durch die Vulkanisierform (10).

2. Verfahren nach Anspruch 1, wobei das Bereitstellen der Tafel (5), welche die Informationen, die eingeprägt werden sollen, und den optischen Code (7) enthält, umfasst:
- Erfassen eines Bildes der Tafel (5);
- Ablesen der Informationen, die eingeprägt werden sollen, von dem Bild;
- Kodieren der Informationen, die eingeprägt werden sollen;
- Anbringen des optischen Codes (7) an der Tafel (5).

3. Verfahren nach Anspruch 1 oder 2, wobei die Informationen, die eingeprägt werden sollen, eine Vielzahl von Ziffern umfassen, die auf einer ersten Seite (5a) der Tafel (5) eingraviert sind und eine Woche eines Sonnenjahres und ein Sonnenjahr angeben.

4. Verfahren nach Anspruch 2 oder Anspruch 3 sofern abhängig von Anspruch 2, wobei das Erfassen des Bildes durch eine OCR-Kamera (110) erfolgt.

5. Verfahren nach Anspruch 4, wobei das Ablesen der Informationen, die eingeprägt werden sollen, durch die OCR-Kamera (110) erfolgt.

6. Verfahren nach Anspruch 2 oder nach einem der Ansprüche 3 bis 5, sofern abhängig von Anspruch 2, wobei das Anbringen des optischen Codes (7) durch eine Lasermarkierungs- oder -schnittvorrichtung (120) erfolgt.

7. Verfahren nach einem der vorhergehenden Ansprüche, wobei der optische Code (7) ein Datamatrix-Code ist.

8. Verfahren nach Anspruch 2 oder nach einem der Ansprüche 3 bis 7 sofern abhängig von Anspruch 2, wobei das Verfahren vor dem Erfassen des Bildes das Anordnen der Tafel (5) auf einer Fördereinrichtung (15) umfasst, die sich bewegende Elemente (16), die dazu ausgestaltet sind, die Tafel (5) zu bewegen, und Umlenkelemente (17) umfasst, die dazu ausgestaltet sind die Tafel (5) entlang einer vorbestimmten Zuführrichtung (A) zu orientieren.

9. Verfahren nach einem der vorhergehenden Ansprüche, wobei:
- die Tafel (5) zumindest ein erstes Kopplungselement (6; 6a) umfasst, das dazu ausgestaltet ist, mit der Vulkanisierform (10) gekoppelt zu werden;
- die Vulkanisierform (10) zumindest ein zweites Kopplungselement (12; 12a) umfasst, das dazu ausgestaltet ist, mit der Tafel (5) gekoppelt zu werden;
wobei das zumindest eine erste Kopplungselement (6; 6a) und das zumindest eine zweite Kopplungselement (12; 12a) dazu ausgestaltet sind, zu erlauben, dass die Tafel (5) in der Vulkanisierform (10) mit einer Kopplung vom "Poka-Yoke"-Typ montiert wird.

10. Verfahren nach Anspruch 9 sofern abhängig von Anspruch 3,
wobei das zumindest eine erste Kopplungselement einen Stopfen (6) umfasst, der freitragend von einer zweiten Seite (5b) der Tafel (5), welche der ersten Seite (5a) entgegengesetzt ist, wegragt.

11. Verfahren nach Anspruch 10, wobei das zumindest eine zweite Kopplungselement ein Loch (12) umfasst, das in die Vulkanisierform (10) eingebracht ist und einen Durchmesser mit einer Größe aufweist, um einen Formschluss mit dem Stopfen (6) zu erhalten.

12. Verfahren nach Anspruch 3 oder nach einem der Ansprüche 4 bis 11, sofern abhängig von Anspruch 3, wobei die Vielzahl von Ziffern eine umgekehrte Sequenz von Ziffern (3a) der Sequenz von Ziffern einer DOT-Nummer (3) ist.

13. Verfahren nach Anspruch 3 oder nach einem der Ansprüche 4 bis 12, sofern abhängig von Anspruch 3, wobei der optische Code (7) eine Längsdimension zwischen 10 % und 20 % einer Längsdimension der ersten Seite (5a) und eine Querdimension zwischen 10 % und 15 % einer Querdimension der ersten Seite (5a) aufweist.

14. Verfahren zur Fertigung eines Reifens (1), umfassend:
- Bereitstellen eines Rohreifens;
- Ausführen eines Steuerverfahrens nach einem der vorhergehenden Ansprüche.

15. Reifen (1), der durch Ausführen des Verfahrens nach Anspruch 14 erhalten wird, umfassend Informationen, die an einer Seitenwand (2) desselben eingeprägt sind, und ein Muster (7a) in der Nähe der eingeprägten Informationen, das den optischen Code (7) wiedergibt.

## Revendications

1. Procédé de commande d'un processus de moulage et de vulcanisation d'un pneu (1), le procédé comprenant :
- la fourniture d'un panneau (5) contenant une information à imprimer sur ledit pneu (1) et un code optique (7) contenant un codage de ladite information à imprimer ;
- le montage du panneau (5) sur un moule de vulcanisation (10) ;
- la lecture, par un lecteur optique (130), du code optique (7) du panneau (5) monté sur le moule de vulcanisation (10) de manière à décoder ladite information à imprimer et obtenir une information décodée ;
- la comparaison de ladite information décodée à une information de référence, et
- si ladite information décodée correspond à ladite information de référence, le moulage et la vulcanisation du pneu (1) par ledit moule de vulcanisation (10).

2. Procédé selon la revendication 1, dans lequel la fourniture dudit panneau (5) contenant ladite information à imprimer et ledit code optique (7) comprend :
- l'acquisition d'une image dudit panneau (5) ;
- la lecture, dans ladite image, de ladite information à imprimer ;
- le codage de ladite information à imprimer ;
- l'application dudit code optique (7) sur le panneau (5) .

3. Procédé selon la revendication 1 ou 2, dans lequel ladite information à imprimer comprend une pluralité de chiffres gravés sur une première face (5a) dudit panneau (5) et indiquant une semaine d'une année solaire et une année solaire.

4. Procédé selon la revendication 2 ou 3 lorsqu'elle dépend de la revendication 2, dans lequel l'acquisition de ladite image est réalisée par une caméra de reconnaissance OCR (110).

5. Procédé selon la revendication 4, dans lequel la lecture de ladite information à imprimer est réalisée par ladite caméra de reconnaissance OCR (110).

6. Procédé selon la revendication 2 ou l'une quelconque des revendications 3 à 5 lorsqu'elles dépendent de la revendication 2, dans lequel l'application dudit code optique (7) est réalisée par un dispositif de marquage ou d'incision au laser (120).

7. Procédé selon l'une quelconque des revendications précédentes, dans lequel ledit code optique (7) est un code 2D.

8. Procédé selon la revendication 2 ou l'une quelconque des revendications 3 à 7 lorsqu'elles dépendent de la revendication 2, comprenant, avant l'acquisition de ladite image, l'agencement dudit panneau (5) sur un dispositif de transport (15) comprenant des organes mobiles (16) configurés pour déplacer le panneau (5) et des organes déflecteurs (17) configurés pour orienter le panneau (5) le long d'une direction d'alimentation prédéterminée (A).

9. Procédé selon l'une quelconque des revendications précédentes, dans lequel :
- ledit panneau (5) comprend au moins un premier élément de couplage (6 ; 6a) configuré pour se coupler avec le moule de vulcanisation (10) ;
- ledit moule de vulcanisation (10) comprend au moins un deuxième élément de couplage (12 ; 12a) configuré pour se coupler avec le panneau (5) ;
dans lequel lesdits au moins un premier élément de couplage (6 ; 6a) et au moins un deuxième élément de couplage (12 ; 12a) sont configurés pour permettre au panneau (5) d'être monté dans le moule de vulcanisation (10) avec un couplage de type « antierreur ».

10. Procédé selon la revendication 9 lorsqu'elle dépend de la revendication 3, dans lequel ledit au moins un premier élément de couplage comprend un bouchon (6) faisant saillie en porte-à-faux d'une deuxième face (5b) du panneau (5) opposée à ladite première face (5a).

11. Procédé selon la revendication 10, dans lequel ledit au moins un deuxième élément de couplage comprend un trou (12) ménagé dans le moule de vulcanisation (10) et ayant un diamètre d'une taille telle à obtenir une forme de couplage avec ledit bouchon (6).

12. Procédé selon la revendication 3 ou l'une quelconque des revendications 4 à 11 lorsqu'elles dépendent de la revendication 3, dans lequel ladite pluralité de chiffres est une séquence de chiffres inverse (3a) de la séquence de chiffres d'un DOT (3).

13. Procédé selon la revendication 3 ou l'une quelconque des revendications 4 à 12 lorsqu'elles dépendent de la revendication 3, dans lequel ledit code optique (7) a une dimension longitudinale comprise entre 10% et 20% d'une dimension longitudinale de ladite première face (5a) et une dimension transversale comprise entre 10% et 15% d'une dimension transversale de ladite première face (5a).

14. Processus de fabrication d'un pneu (1), comprenant :
- la fourniture d'un pneu cru ;
- la mise en œuvre d'un procédé de commande selon l'une quelconque des revendications précédentes.

15. Pneu (1) obtenu par la mise en œuvre du processus de la revendication 14, comprenant une information imprimée sur un flanc (2) de celui-ci et, à proximité de ladite information imprimée, un motif (7a) reproduisant ledit code optique (7).
